(19) Europäisches Patentamt
European Patent Office
Office européen des brevets

(11) Veröffentlichungsnummer: **0 176 658**
**B1**

(12) # EUROPÄISCHE PATENTSCHRIFT

(45) Veröffentlichungstag der Patentschrift: **27.06.90**

(51) Int. Cl.[5]: **B 01 D 53/34,** B 01 D 53/14

(21) Anmeldenummer: **85104372.9**

(22) Anmeldetag: **11.04.85**

(54) **Verfahren zur Regeneration einer Waschlösung, die zur simultanen Auswaschung von Stickoxid und Schwefeldioxid aus Rauchgasen eingesetzt wird.**

(30) Priorität: **26.09.84 DE 3435222**

(43) Veröffentlichungstag der Anmeldung:
**09.04.86 Patentblatt 86/15**

(45) Bekanntmachung des Hinweises auf die Patenterteilung:
**27.06.90 Patentblatt 90/26**

(84) Benannte Vertragsstaaten:
**AT BE DE FR GB IT LU NL**

(56) Entgegenhaltungen:
**DE-A-2 848 788**
**GB-A-1 491 386**
**US-A-4 055 623**
**US-A-4 267 155**

(73) Patentinhaber: **Krupp Koppers GmbH**
**Altendorfer Strasse 120**
**D-4300 Essen 1 (DE)**

(72) Erfinder: **Heiting, Bernt, Dr. Dipl.-Ing.**
**Habichtstrasse 35**
**D-4300 Essen 1 (DE)**

**EP 0 176 658 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Regeneration einer Waschlösung, die den Eisen (II)-Chelatkomplex der Ethylendiaminotetraessigsäure (EDTA) als Komplexbildner enthält und zur simultanen Auswaschung von Stickoxid und Schwefeldioxid aus Rauchgasen eingesetzt wird, wobei das hierbei gebildete Imidodisulfonat anschließend aus der Waschlösung entfernt und einer wirtschaftlichen Verwertung zugeführt wird, während die vom Imidodisulfonat befreite Waschlösung nach Ausgleich der Komplexbildner- und Alkaliionenverluste im Kreislauf rückgeführt wird.

Infolge der immer stärker auftretenden Umweltschäden ist man in zunehmendem Maße bestrebt, sowohl die Emissionen von Schwefeldioxid als auch von Stickoxid drastisch herabzusetzen. Das gilt natürlich insbesondere für Großfeuerungsanlagen, wie beispielsweise Kraftwerke. Hier ist z.B. vorgesehen, daß für alle Neuanlagen von Kraftwerken, deren installierte Leistung über 300 MW beträgt, der $NO_x$-Ausstoß auf 200 mg/m$^2$ begrenzt werden soll. Es hat deshalb in neuerer Zeit nicht an Versuchen gefehlt, Verfahren zu entwickeln, die eine Entfernung der genannten Schadstoffe aus dem Rauchgas ermöglichen sollen.

Zu diesem Zwecke ist bereits vorgeschlagen worden, die Rauchgaswäsche mit einer Waschlösung durchzuführen, die als Komplexbildner den Eisen (II)-Chelatkomplex der Ethylendiaminotetraessigsäure (EDTA) enthält. Hierbei wird im wässerigen Medium der Waschlösung das Schwefeldioxid unter Bildung von schwefeliger Säure bzw. deren Salzen gemäß der Gleichung

$$SO_2+H_2O \rightleftharpoons H_2SO_3$$

gebunden. Je nach dem $p_H$-Wert der Waschlösung kommt es dabei zur Bildung von Hydrogensulfit ($p_H \leq 5$) oder Sulfit ($p_H \geq 9$). Dabei wird bei der Rauchgaswäsche vorzugsweise im schwachsauren Medium ($p_H$ 5—7) gearbeitet. Gleichzeitig wird das Stickoxid durch den in der Waschlösung als Komplexbildner enthaltenen Eisen (II)-Chelatkomplex der Ethylendiaminotetraessigsäure (EDTA) gemäß folgender Gleichung gebunden:

$$Fe^{2+}-EDTA+NO \rightarrow Fe^{2+}-EDTA \times NO$$

Das heißt, der Vorteil dieser Arbeitsweise ist vor allem darin zu sehen, daß sie die simultane Auswaschung von Stickoxid und Schwefeldioxid in einer einzigen Apparatur ermöglicht. Im Anschluß an die Auswaschung wird das an den Eisen (II)-Chelatkomplex angelagerte NO-Molekül durch die in der Waschlösung enthaltenen Sulfit- und Hydrogensulfitionen nach Abspalten aus dem Komplex in Schwefel-Stickstoffverbindungen überführt, während dadurch gleichzeitig der Eisen (II)-Chelatkomplex regeneriert wird und erneut aufnahmefähig ist.

Eingehende Untersuchungen haben nun ergeben, daß hierbei neben ganz geringen Mengen an anderen Stickstoff-Schwefel-Verbindungen im wesentlichen Imidodisulfonate $NH(SO_3)_2^{2-}$ entstehen.

Hierfür soll beispielsweise folgende Reaktionsleichung genannt werden:

$$2\ NO+5\ HSO^-_3 \rightarrow 2NH(SO_2)_2^{2-}+HSO_4^-+H_2O$$

Sofern dabei der $p_H$-Wert in der Waschlösung>7 ist, kann es auch zur Bildung von Distickstoffoxid $N_2O$ kommen, welches gasförmig entweicht. Deshalb ist es, wie bereits weiter oben festgestellt wurde, zweckmäßig, bei der Rauchgaswäsche im schwachsauren Medium zu arbeiten und damit die $N_2O$-Bildung zu vermeiden.

Da die Waschlösung normalerweise im Kreislauf geführt wird, kommt es deshalb im Laufe der Zeit zu einer Anreicherung der Imidodisulfonate in der Waschlösung, was insbesondere durch die Abscheidung von kristallisiertem Imidodisulfonat zu Störungen des Waschprozesses führen kann. Es ist deshalb erforderlich, durch geeignete Maßnahmen dafür Sorge zu tragen, daß diese unerwünschte Anreicherung des Imidodisulfonates in der Waschlösung und die dadurch verursachten Störungen vermieden werden. Es ist deshalf bereits vorgeschlagen worden, das Imidodisulfonat aus der Waschlösung zu entfernen und einer Verwertung zuzuführen, während die vom Imidodisulfonat befreite Waschlösung nach Ausgleich der Komplexbildner- und Alkaliionenverluste in den Kreislauf zurückgeführt wird. Bezüglich der Verwertung des abgeschiedenen Imidodisulfonates bzw. der Imidodisulfonsäure sind hierbei bereits unterschiedliche Vorschläge unterbreitet worden. In der US—A—4 055 623 wird eine Verwendung als Pflanzenschutzmittel oder eine hydrolytische Zersetzung zu Ammonsulfat vorgeschlagen. Beim Verfahren nach der DE—A—28 48 788 gelangt eine thermische Zersetzung zur Anwendung, wobei das gebildete Kaliumsulfid anschließend mit $CO_2$ zu Kaliumcarbonat umgesetzt wird. In der US—A—4 267 155 wird schließlich eine Zersetzung unter reduzierenden Bedingungen vorgeschlagen, bei der als Reaktionsprodukte Stickstoff, Kaliumsulfid, Schwefelwasserstoff und Wasser entstehen.

Der Erfindung liegt die Aufgabe zugrunde, das Problem der Verwertung des aus der Waschlösung abgeschiedenen Imidodisulfonates in einer wirtschaftlich vertretbaren und sinnvollen Weise zu lösen, wobei zu berücksichtigen ist, daß ein Ablassen der verbrauchten Waschlösung in einen Vorfluter wegen ihres hohen Gehaltes an Schadstoffen nicht ohne weiteres möglich ist. Auch andere, in solchen Fällen

gebräuchliche Verfahren, wie beispielsweise die Zersetzung oder Crackung des Imidodisulfonates in gesonderten Apparaturen, scheiden aus, da hierbei leicht die Situation eintreten kann, daß der Aufwand für die Regeneration der Waschlösung die Kosten für die eigentliche Gaswäsche übersteigt.

Das der Lösung der vorstehend beschriebenen Aufgabe dienende Verfahren der eingang genannten Art ist erfindungsgemäß dadurch gekennzeichnet, daß jeweils zwischen 0,3 und 3,0 Vol.-% der umlaufenden Waschlösung aus dem Kreislauf zwecks Abscheidung des Imidodisulfonates abgezweigt werden und das abgeschiedene Imidodisulfonat durch ein- oder mehrmalige Wäsche gereinigt wird, wobei das gereinigte Imidodisulfonat durch einen Teilstrom des heißen Rauchgases bei einer Temperatur von 350 bis 400°C zersetzt wird, worauf das verbleibende Sulfat-Sulfit-Gemisch abgetrennt und in Gips umgewandelt wird, und das schwefeldioxid- und stickstoffhaltige Abgas der Zersetzungsreaktion dem Rauchgas vor dem Eintritt in die Gaswäsche wieder zugesetzt wird, während das bei Anwendung von Ammoniak als alkalische Komponente in der Waschlösung anfallende gereinigte Ammoniumimidodisulfonat als Mineraldünger verwendet wird.

Bei Anwendung des erfindungsgemäßen Verfahrens wird das Imidodisulfonat durch geeignete Maßnahmen in wirtschaftlich verwertbar Produkte überführt, wobei der hierfür erforderliche Aufwand so ist, daß die Kosten für die Regenerierung der Waschlösung den Gesamtprozeß nicht belasten, sondern daß vielmehr durch die Gewinnung wertvoller Nebenprodukte die Kostensituation für den Gesamtprozeß günstig beeinflußt wird.

Für die Durchführung des erfindungsgemäßen Verfahrens sind zwei Varianten vorgesehen.

Die erste Verfahrensvariante besteht darin, daß das abgeschiedene und durch ein- oder mehrmalige Wäsche gereinigte Imidodisulfonat durch einen Teilstrom des heißen Rauchgases bei einer Temperatur von 350 bis 400°C unter $SO_2$- und Stickstoffabspaltung zersetzt wird, worauf das verbleibende Sulfat-Sulfit-Gemisch abgetrennt und in Gips umgewandelt wird, während das schwefeldioxid- und stickstoffhaltige Abgas der Zersetzungsreaktion dem Rauchgas vor dem Eintritt in die Gaswäsche wieder zugesetzt wird.

Eine zweite Variante des erfindungsgemäßen Verfahrens ist dann gegeben, wenn die umlaufende Waschlösung Ammoniak als alkalische Komponente enthält. In diesem Falle wird aus der Waschlösung Ammoniumimidodisulfonat abgeschieden, das nach entsprechender Reinigung durch ein- oder mehrmalige Wäsche als Mineraldünger in der Landwirtschaft Verwendung finden kann. Mit einem Stickstoffgehalt von ca. 21% ist das Ammoniumimidodisulfonat $NH(SO_3NH_4)_2$ dabei durchaus mit anderen Stickstoffdüngern, wie z.B. Kalkammonsalpeter oder Ammonsulfatsalpeter, vergleichbar.

Die erste Verfahrensvariante soll nachfolgend an einem Ausführungsbeispiel mit Hilfe des in der Abbildung dargestellten Fließschemas erläutert werden. Hierbei hendelt es sich um eine Anlage, die zur Behandlung von $10^6$ $m^3$/h Rauchgas vorgesehen ist. Dieses Rauchgas stammt aus der Kesselanlage 1 eines Kraftwerkes, aus der es mit einer Temperatur von ca. 400°C durch die Leitung 2 in den Luftvorwärmer 3 gelangt. In diesem wird das heiße Rauchgas bis auf eine Temperatur von 140°C abgekühlt, während gleichzeitig die Luft, welche über das Gebläse 4 und die Leitung 5 in den Luftvorwärmer 3 gelangt, dort von 30°C bis auf 350°C erwärmt wird. Anschließend wird die so erwärmte Luft über die Leitung 6 als Verbrennungsluft in die Kesselanlage 1 eingeleitet. Das Rauchgas gelangt währenddessen über die Leitung 7 in den Elektrofilter 8, in dem seine Entstaubung erfolgt. Danach wird es über das Gebläse 9 und die Leitung 10 in den Gasvorwärmer 11 transportiert, in dem es bis auf 95°C abgekühlt wird. Mit dieser Temperatur tritt das Rauchgas über die Leitung 12 in den Unterteil des Füllkörperwaschers 13 ein, in dem die simultane Auswaschung von Stickoxid und Schwefeldioxid nach dem weiter oben beschriebenen Verfahren erfolgt. Das von diesen Gasbestandteilen befreite Rauchgas wird über die Leitung 14 aus dem Füllkörperwascher 13 abgezogen und gelangt über den Tropfenabscheider 15 sowie die Leitung 16 in den Gasvorwärmer 11. Hier wird das Rauchgas von ca. 48°C auf 100°C wieder erwärmt, um anschließend mit dieser Temperatur über die Leitung 17 in den Kamin 18 eingeleitet zu werden. Die Wiedererwärmung des gereinigten Rauchgases ist hierbei erforderlich, damit das Gas über den Kamin 18 in höhere Luftschichten gelangen kann.

Die erforderliche Waschlösung wird in einer Menge von 150 000 $m^3$/h über die Umlaufleitung 19 von oben auf das Füllkörperpaket 20 des Füllkörperwaschers 13 aufgegeben, so daß Rauchgas und Waschlösung im Gegenstrom zueinander fließen. Die unten aus dem Füllkörperwascher 13 ablaufende Waschlösung wird mittels der Pumpe 21 wieder in die Umlaufleitung 19 gedrückt. Von der im Kreislauf geführten Waschlösung werden jeweils 500 $m^3$/h, also ca. 0,3 Vol.-%, abgezweigt und über die Leitung 22 in den Hydrozyklon 23 eingeleitet, in dem das in diesem Teilstrom der Waschlösung enthaltene Imidodisulfonat abgetrennt wird. Die vom Imidodisulfonat befreite Waschlösung wird sodann über die Leitung 24 und die Pumpe 25 in den Sumpf des Füllkörperwaschers 13 wiedereingeleitet. Das Imidodisulfonat wird währenddessen über die Leitung 26 auf den Trommelfilter 27 aufgegeben, in dem es durch ein- oder mehrmaliges Waschen gereinigt wird. Die hierfür erforderliche Frischwasserzugabe erfolgt durch die Leitung 28, während das ablaufende Waschwasser über die Leitung 29 aus dem Trommelfilter 27 abgezogen wird und der Waschlösung in der Leitung 24 zugesetzt wird. Zum Ausgleich der Komplexbildnerverluste werden dabei dem Waschwasser in der Leitung 29 über die Leitung 30 im erforderlichen Umfang Fe(II)-EDTA sowie Na- und K-Ionen aus der Gipsfällung zugesetzt.

Das gereinigte Imidodisulfonat wird währenddessen über die Leitung 31 vom Trommelfilter 27 abgezogen und mittels der Dosierschnecke 32 in eine Menge von ca. 5 t/h mit einem Wassergehalt von 10 Gew.-% in den Schleudertrockner 33 eingeleitet. Zur Beheizung desselben wird von dem heißen Rauchgas

in der Leitung 2 ein Teilstrom von 50 000 $m^3/h$ abgezweigt und über die Leitung 34 mittels des Gebläses 35 in den Elektrofilter 36 gedrückt. Anschließend gelangt der entstaubte Teilstrom des Rauchgases mit einer Temperatur von ca. 400°C in den Schleudertrockner 33. In diesem wird infolge der hohen Temperatur das Imidodisulfonat zersetzt. Die Zersetzung z.B. des Kaliumimidodisulfonates erfolgt nach folgender Reaktionsgleichung:

$$2NH(SO_3K)_2 \xrightarrow{400°C} 2SO_2+K_2SO_4+K_2SO_3+H_2O+N_2$$

Die Schwefeldioxid und Stickstoff enthaltenden Abgase der Zersetzungsreaktion werden über die Leitung 38 aus dem Schleudertrockner 33 abgezogen und gelangen über den Zyklon 39 in die Leitung 40, die in die Leitung 10 mündet. Das Abgas in der Leitung 40 weist dabei eine Temperatur von ca. 360°C auf, mit der es dem Gasstrom in der Leitung 10 vor dem Gasvorwärmer 11 zugesetzt wird. Das als festes Zersetzungsprodukt anfallende Sulfat-Sulfit-Gemisch wird über die Leitungen 41 und 42 aus dem Schleudertrockner 33 bzw. dem Zyklon 39 abgezogen und über die Leitung 43 seiner weiteren, im Fließschema nicht näher dargestellten Verarbeitung zugeführt. Hierbei wird zunächst unter Wasserzugabe das Sulfit mit Luftsauerstoff zu Sulfat oxidiert. Anschließend wird das Sulfat durch Kalkzugabe als Gips ausgefällt, während die dabei freigesetzten Alkaliionen zum Ausgleich der Ionenverluste in der Waschlösung über die Leitung 30, wie bereits weiter oben beschrieben, in den Kreislauf zurückgeführt werden können. Bei dem Schleudertrockner 33 kann es sich dabei um einen Kurzzeittrockner handeln, in dem die Reaktionsmedien im Gleichstrom geführt werden. Deren Verweilzeit im Trockner beträgt hierbei je nach Größe des Apparates ca. 8 bis 13 Sekunden. Sofern das eingesetzte Imidodisulfonat als Begleitstoff noch geringe Mengen anderer Schwefel-Stickstoffverbindungen enthält, werden diese bei der thermischen Behandlung in analoger Weise zersetzt.

Das vorliegende Fließschema gilt natürlich bei entsprechender Abwandlung auch für die zweite Verfahrensvariante. Hierbei wird das über die Leitung 31 vom Trommelfilter 27 abgezogene Ammoniumimidodisulfonat der entsprechenden Weiterbehandlung zugeführt, und es entfällt der Abzug eines Teilstromes des heißen Rauchgases aus der Leitung 2 über die Leitung 34.

## Patentanspruch

Verfahren zur Regeneration einer Waschlösung, die den Eisen (II)-Chelatkomplex der Ethylendiaminotetraessigsäure (EDTA) als Komplexbildner enthält und zur simultanen Auswaschung von Stickoxid und Schwefeldioxid aus Rauchgasen eingesetzt wird, wobei das hierbei gebildete Imidodisulfonat anschließend aus der Waschlösung entfernt und einer wirtschaftlichen Verwertung zugeführt wird, während die vom Imidodisulfonat befreite Waschlösung nach Ausgleich der Komplexbildner- und Alkaliionenverluste im Kreislauf rückgeführt wird, dadurch gekennzeichnet, daß jeweils zwischen 0,3 und 3,0 Vol-% der umlaufenden Waschlösung aus dem Kreislauf zwecks Abscheidung des Imidodisulfonates abgezweigt werden und das abgeschiedene Imidodisulfonat durch ein- oder mehrmalige Wäsche gereinigt wird, wobei das gereinigte Imidodisulfonat durch einen Teilstrom des heißen Rauchgases bei einer Temperatur von 350 bis 400°C zersetzt wird, worauf das verbleibende Sulfat-Sulfit-Gemisch abgetrennt und in Gips umgewandelt wird, und das schwefeldioxid- und stickstoffhaltige Abgas der Zersetzungsreaktion dem Rauchgas vor dem Eintritt in die Gaswäsche wieder zugesetzt wird, während das bei Anwendung von Ammoniak als alkalische Komponente in der Waschlösung anfallende gereinigte Ammoniumimidodisulfonat als Mineraldünger verwendet wird.

## Revendication

Procédé pour la régénération d'une solution de lavage qui renferme, en tant que complexant, le complexe chélaté de fer-(II) et d'acide éthylène-diamino-tétracétique (AEDT) et pour l'extraction simultanée par lavage de l'oxyde d'azote et du dioxyde de soufre à partir de gaz de fumée, l'imido-disulfonate formé dans ce cas étant éliminé de la solution de lavage et délivré à une exploitation rentable, tandis que la solution de lavage, qui est débarrassée de l'imido-disulfonate, est remise en circulation après compensation des pertes en complexant et en ions alcalins, ledit procédé étant caractérisé par le fait que l'on dérive chaque fois du circuit entre 0,3 et 3,0% en volume de la solution de lavage en circulation, en vue de séparer l'imido-disulfonate, et que l'on purifie par un ou plusieurs lavages l'imido-disulfonate séparé, l'imido-disulfonate purifié étant décomposé à une température de 350 à 400°C par un courant partiel du gaz de fumée chaud, après quoi le mélange de sulfate et de sulfite qui reste est séparé et transformé en plâtre, et que le gaz d'échappement, provenant de la réaction de décomposition et renfermant du dioxyde de soufre et de l'azote, est à nouveau envoyé au gaz de fumée avant l'entrée dans le dispositif de lavage du gaz, tandis que l'imido-disulfonate d'ammonium purifié, se formant dans la solution de lavage lors de l'utilisation d'ammoniac en tant que composant alcalin, est utilisé comme engrais minéral.

## Claim

Process for regenerating a wash solution, which contains the iron(II) chelate complex of

ethylenediaminetetraacetic acid (EDTA) as a complex former and is used for simultaneously washing nitric oxide and sulphur dioxide out of flue gases, the imidodisulphonate thus formed being removed subsequently from the wash solution and being passed to economic utilization, while the wash solution freed of the imidodisulphonate is recirculated after making up the losses of complex former and alkali metal ions, characterized in that between 0.3 and 3.0% by volume of the circulating wash solution are branched off each time from the circulation for separating off the imidodisulphonate and the imidodisulphonate separated off is purified by washing it once or several times, the purified imidodisulphonate being decomposed at a temperature of 350 to 400°C by a part stream of the hot flue gas, whereupon the remaining sulphate/sulphite mixture is separated off and converted to gypsum, and the waste gas, containing sulphur dioxide and nitrogen, from the decomposition reaction is added again to the flue gas upstream of the inlet to the gas wash, whereas the purified ammonium imidodisulphonate, arising when ammonia is used as the alkaline component in the wash solution, is used as a mineral fertilizer.

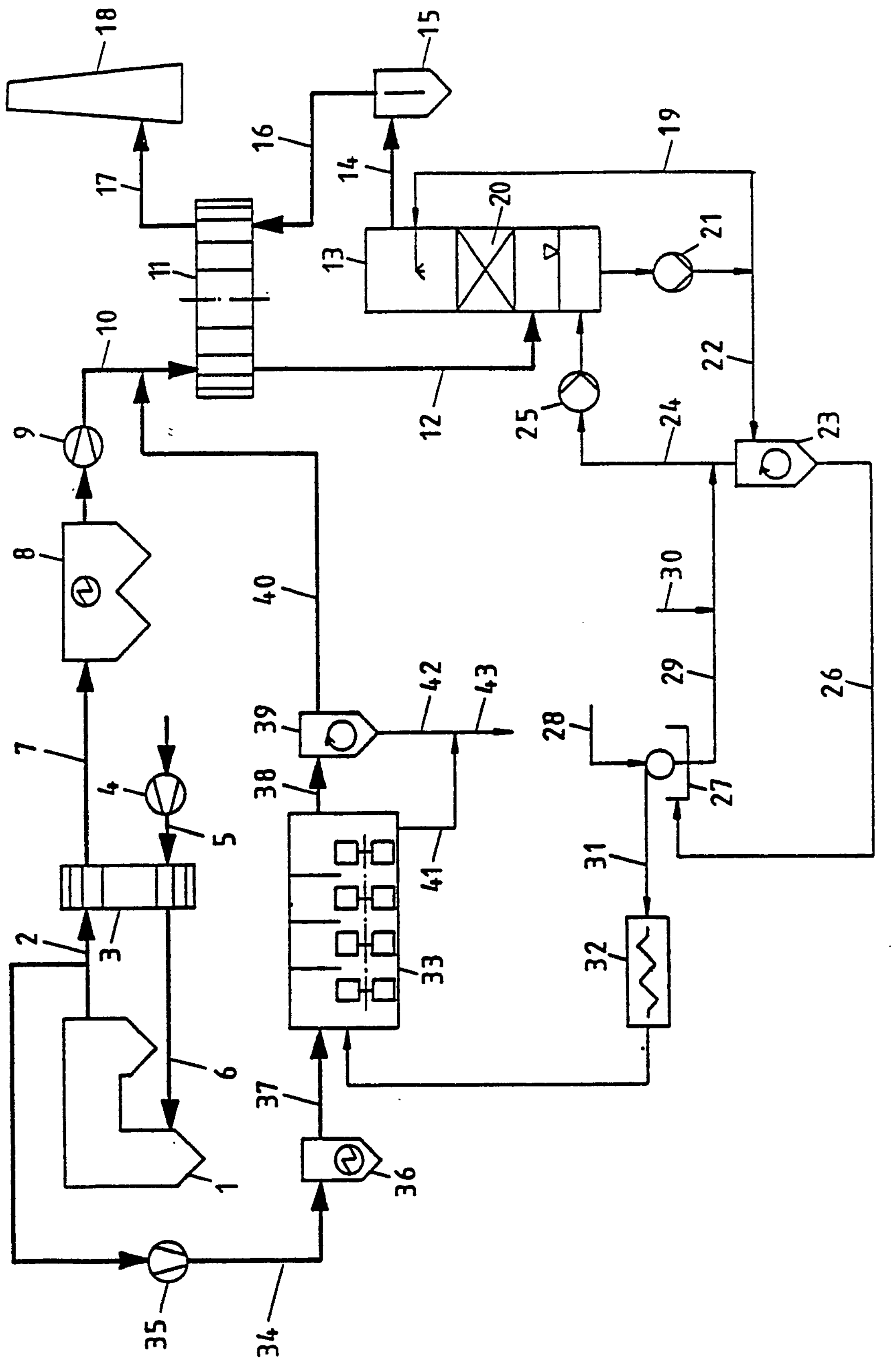
1
2
3
4
5
6
7
8
9
10
11
12
13
14
15
16
17
18
19
20
21
22
23
24
25
26
27
28
29
30
31
32
33
34
35
36
37
38
39
40
41
42
43